# EUROPEAN PATENT SPECIFICATION

(11) **EP 3 273 047 B1**
(45) Date of publication and mention of the grant of the patent: **01.01.2020**
(21) Application number: 16765172.8
(22) Date of filing: 04.03.2016
(51) Int. Cl.: F02M 21/02, F02M 21/06, F02D 19/02, F02B 73/00

(54) **FUEL GAS SUPPLY SYSTEM**
BRENNGASVERSORGUNGSSYSTEM
SYSTÈME D'ALIMENTATION EN GAZ CARBURANT

(30) Priority: 19.03.2015 KR 20150038196
(43) Date of publication of application: 24.01.2018
(73) Proprietor: Samsung Heavy Ind. Co., Ltd., Seoul 06620 (KR)
(72) Inventor: LEE, Weon Doo, Geoje-si Gyeongsangnam-do 53261 (KR); KANG, Ho Suk, Geoje-si Gyeongsangnam-do 53261 (KR); LEE, Jong Chul, Geoje-si Gyeongsangnam-do 53261 (KR); LEE, Hyo Eun, Geoje-si Gyeongsangnam-do 53261 (KR); HWANG, Ye Rim, Geoje-si Gyeongsangnam-do 53261 (KR)
(74) Representative: Pfenning, Meinig & Partner mbB
(86) International application number: PCT/KR2016/002175
(87) International publication number: WO 2016/148416

(56) References cited:
- WO-A1-2009/136793
- KR-A- 20140 013 808
- KR-A- 20150 001 597
- KR-B1- 101 277 833
- US-A1- 2001 018 833
- US-A1- 2014 290 279

## Description

### [Technical Field]

The present invention relates to a fuel gas supply system.

### [Background Art]

As IMO (International Maritime Organization) regulations on the emission of greenhouse gases and various air pollutants are strengthened, in shipbuilding and shipping industries, instead of using conventional fuels such as heavy oil and diesel oil, natural gas, which is a clean energy source, is often used as fuel gas for ships.

Natural gas, which is widely used among fuel gases, is mainly composed of methane, and typically stored and transported in a liquefied gas state that has a volume reduced to 1/600.

Such liquefied gas is contained in a storage tank which is installed in an insulated manner in a hull of a ship, and is stored and transported, and an engine of the ship is driven by being supplied with liquefied gas or boil-off gas or the like as fuel gas. Herein, boil-off gas includes a natural boil-off gas generated by naturally vaporizing liquefied gas contained in a storage tank, and forced boil-off gas generated by forcibly vaporizing liquefied gas. The liquefied gas or the boiled off gas is supplied according to the conditions required by the engine through treating processes such as compression and vaporization, and the like.

For instance, document KR 2014 0138018 A discloses a hybrid fuel supply system for a ship engine. The system described therein comprises a storage tank for storing liquefied natural gas, a high-pressure gas injection engine, and a DF engine using the liquefied natural gas as fuel. The hybrid fuel supply system for the ship engine includes a compressor line compressing an evaporated gas generated in the storage tank by a compressor and supplying the gas to the engines as the fuel. A high pressure pump line compressing the liquefied natural gas housed in the storage tank by a pump and supplying the gas to the engines as the fuel is provided. Furthermore, a reliquefying device for reliquefying the evaporated gas compressed by the compressor and making the gas return to the storage tank is provided, as well as a methane number adjustment unit for adjusting a methane number of the fuel supplied to the DF engine

In recent years, a low-pressure (about 5 to 8 bars) injection engine such as a DFDE (Dual Fuel Diesel Electric) engine and a high-pressure (about 150 to 400 bars) injection engine such as a ME-GI engine (Man B & W's Gas Injection Engine) have been widely used for propulsion of ships or for power generation of ships. In addition, a medium-pressure gas injection engine capable of combusting with a medium pressure (about 16 to 18 bars) fuel gas has been developed and used.

In addition to methane, natural gas includes ethane, propane, butane, and the like, and varies in the composition depending on the place of production, and so in order to supply liquefied gas or boil-off gas as fuel gas to the engines described above, it must be supplied in accordance with the conditions of methane numbers required by the engines. If fuel gas supplied to an engine is lower than an appropriate methane number, pistons of the engine may be exploded and burned before reaching the top dead point, causing problems such as abrasion of the engine pistons, deterioration of engine efficiency, knocking and the like.

Herein, the boiling point of methane is -161.5°C, which is lower than that of other components of natural gas such as ethane (boiling point: -89°C) and propane (boiling point: -45°C). Accordingly, since the natural boil-off gas, which is naturally vaporized in a storage tank, has a high methane number, and the generation amount of natural boil-off gas is large in the case of the laden voyage fully filled with liquefied gas in the storage tank, it is possible to easily meet an appropriate methane number required by an engine.

However, since the generation amount of natural boil-off gas is greatly reduced in the case of ballast voyage in which liquefied gas is not largely contained in the storage tank after unloading liquefied gas, there is a problem that it is difficult to meet an appropriate methane number required by an engine. Therefore, it is necessary to provide fuel gas having a methane number suitable for the level required by the engine to the engine even in the case of ballast voyage.

### [Disclosure of Invention]

### [Technical Problem]

Therefore, it is an embodiment of the present disclosure is to provide a fuel gas supply system capable of effectively supplying fuel gas in accordance with the methane number condition required by the engine.

### [Technical Solution]

In accordance with one aspect of the present disclosure, a fuel gas supply system includes a storage tank to store liquefied gas and boil-off gas of the liquefied gas, a pressure pump to pressurize and discharge the liquefied gas supplied from the storage tank, a vaporizer to vaporize the liquefied gas that has passed through the pressure pump, a pressure reducing valve to receive and depressurize the liquefied gas vaporized, and a gas-liquid separator to separate a mixture of the liquefied gas of the storage tank supplied through the pressure pump, the vaporizer and the pressure reducing valve and the liquefied gas upstream of the pressure pump supplied from the storage tank into gas components and liquid components.

The fuel gas supply system further includes a first supply line to supply the liquefied gas supplied from the storage tank to a first engine side through the pressure pump and the vaporizer, a second supply line branched from the first supply line downstream of the vaporizer to supply the vaporized liquefied gas to the gas-liquid separator side through the pressure reducing valve, a third supply line branched from the first supply line upstream of the pressure pump to supply the liquefied gas supplied from the storage tank to gas-liquid separator, and a fourth supply line to supply the gas components separated by the gas-liquid separator to a second engine having a lower operating pressure than the first engine as fuel gas.

The fuel gas supply system may further include a heater installed on the fourth supply line to heat the gas components supplied from the gas-liquid separator in accordance with temperature condition required by the second engine.

The fuel gas supply system may further include a measurement device installed on the fourth supply line to measure a methane number of the fuel gas supplied to the second engine.

The measurement device may measure a methane number of the fuel gas with a method of sensing a temperature of the fuel gas.

The fuel gas supply system may further include an on-off valve installed on the third supply line, and a controller to compare a methane number measured by the measurement device with a preset methane number and control the operation of the on-off valve in order to adjust a methane number in accordance with requirements by the second engine.

The fuel gas supply system may further include an injection device installed at an outlet side end of the third supply line that extends to an inner side of the gas-liquid separator to inject the liquefied gas supplied through the third supply line to the inner side of the gas-liquid separator.

The fuel gas supply system may further include a delivery pump installed inside the storage tank to deliver the liquefied gas stored in the storage tank through the first supply line according to a preset pressure.

### [Advantageous Effects]

The fuel gas supply system according to the invention can effectively supply fuel gas in accordance with methane number requirement conditions of engines.

The effects of the present disclosure are not limited to the effects mentioned above, and other effects not mentioned can be clearly understood by those skilled in the art from the description of the claims.

### [Brief Description of Drawings]

FIG. 1 illustrates a fuel gas supply system according to an embodiment of the present disclosure.
FIG. 2 illustrates an example in which an injection device is provided in a gas-liquid separator shown in FIG. 1.

### [Mode for Invention]

Hereinafter, embodiments of the present disclosure will be described in detail with reference to the accompanying drawings.

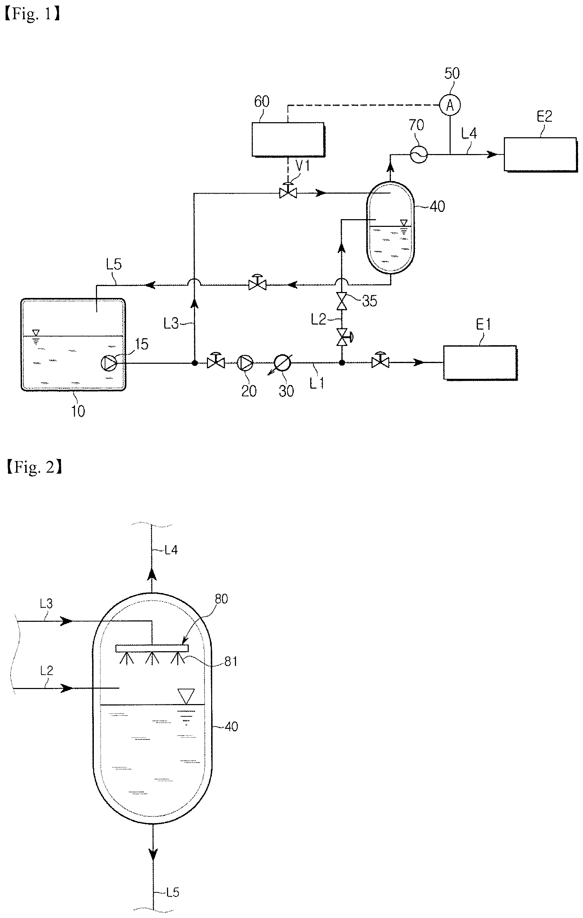

FIG. 1 illustrates a fuel gas supply system according to an embodiment of the present disclosure.

Referring to FIG. 1, a fuel gas supply system 100 according to an embodiment of the present disclosure can effectively supply fuel gas in accordance with methane numbers required by an engine at laden voyage and ballast voyage. This fuel gas supply system 100 may be installed in ships that transport liquefied gas. For example, ships may include various liquefied fuel carriers, liquefied fuel RVs (Regasification Vessels), container ships, general merchant ships, LNG FPSO (Floating, Production, Storage and Off-loading), LNG FSRU (Floating Storage and Regasification Unit) and the like.

The fuel gas supply system 100 includes a storage tank 10 to store liquefied gas and boil-off gas of the liquefied gas, a pressure pump 20 to pressurize and discharge the liquefied gas supplied from the storage tank 10, a vaporizer 30 to liquefy the liquefied gas that has passed through the pressure pump 20, a pressure reducing valve 35 to receive and depressurize the liquefied gas vaporized, and a gas-liquid separator 40 to separate a mixture of the liquefied gas of the storage tank 10 supplied through the pressure pump 20, the vaporizer 30 and the pressure reducing valve 35 and the liquefied gas of a front end of the pressure pump 20 supplied from the storage tank 10 into gas components and liquid components.

Further, the fuel gas supply system 100 include a first supply line L1 to supply the liquefied gas supplied from the storage tank 10 to a first engine E1 side through the pressure pump 20 and the vaporizer 30, a second supply line L2 branched from the first supply line L1 at a rear end of the vaporizer 30 to supply the vaporized liquefied gas to the gas-liquid separator 40 through the pressure reducing valve 35, a third supply line L3 branched from the first supply line L1 at the front end of the pressure pump 20 to supply the liquefied gas supplied from the storage tank 10 to gas-liquid separator 40, and a fourth supply line L4 to supply the gas components separated by the gas-liquid separator 40 to a second engine E2 having a lower operating pressure than the first engine E1 as fuel gas. Herein, the first engine E1 may be, for example, a high-pressure gas injection engine such as an ME-GI engine, and the second engine E2 may be a low-pressure gas injection engine such as a DFDE engine or the like.

The liquefied gas stored in the storage tank 10 may be any one of liquefied natural gas (LNG), liquefied petroleum gas (LPG), dimethylether (DME), and ethane which can be stored in a liquefied state, but is not limited thereto. The storage tank 10 may include a membrane type tank, an SPB type tank, and the like which store the fuel in a liquefied state while maintaining an adiabatic state. When the liquefied gas is LNG, the storage tank 10 can maintain an internal pressure of 1 bar or a higher pressure in consideration of fuel supply conditions, and maintain an internal temperature of about -163°C to maintain the liquefied state.

A delivery pump 15 is provided inside the storage tank 10 so that the liquefied gas stored in the storage tank 10 is delivered through the first supply line L1 according to a preset pressure.

The pressure pump 20 and the vaporizer 30 installed on the first supply line L1 convert the pressure, state, temperature, etc. of the liquefied gas supplied from the storage tank 10 through the first supply line L1 in accordance with the fuel gas supply condition of the first engine E1.

The second supply line L2 is branched from the first supply line L1 at the rear end of the vaporizer 30 and is connected to the pressure reducing valve 35 and the gas-liquid separator 40. The liquefied gas vaporized through the vaporizer 30 is supplied to the gas-liquid separator 40 in a state where the temperature is lowered by the pressure reducing valve 35 provided on the second supply line L2.

Herein, the liquefied gas that is supplied to the gas-liquid separator 40 from the storage tank 10 through the third supply line L3 branched from the first supply line L1 at the front end of the pressure pump 20 is mixed with the liquefied gas that is supplied to the gas-liquid separator 40 through the second supply line L2 described above. The third supply line L3 is provided with an on-off valve VI to regulate the amount of liquefied gas supplied from the storage tank 10 to the gas-liquid separator 40.

As described above, the gas-liquid separator 40 separates a mixture of the liquefied gases supplied through the second supply line L2 and the third supply line L3, respectively, into gas components and liquid components. The liquid components in the gas-liquid separator 40 may be sent to a recovery line L5 through the storage tank 10.

The gas components in the gas-liquid separator 40 are supplied to the second engine E2 through the fourth supply line L4.

Herein, a measurement device 50 that is installed on the fourth supply line L4 measures a methane number of the fuel gas supplied to the second engine E2. At this time, the measurement device 50 measures a methane number with a method of sensing the temperature of the fuel gas. To this end, although not shown, the measurement device 50 may include a temperature sensor, a methane number measuring sensor, and the like.

More specifically, the coexistence of gas phase and liquid phase of LNG is determined by temperature and pressure. On the liquid phase, high hydrocarbon (ethane, propane, butane, etc.) having a high boiling point among LNG exists at a high concentration. On the gas phase, low hydrocarbon (methane) and nitrogen having a low boiling point among LNG exist at a high concentration. In the coexistence of the gas phase and the liquid phase, the temperature and the pressure are the main conditions for maintaining the coexistence of the gas phase and the liquid phase, but once one of these is determined, the rest becomes a dependent element for determining the gas and liquid phase. Since the pressure reducing valve 35 provided on the second supply line L2 described above is regulated to a pressure required by the second engine E2, the pressure of the fourth supply line L4 is determined by the pressure reducing valve 35 of the second supply line L2. Since in a state that the pressure has been determined as such the determination of the composition of each gas and liquid depends on the temperature, the measurement device 50 can measure a methane number with a method of sensing the temperature of the fuel gas supplied to the second engine E2.

Methane number information measured by the measurement device 50 is transmitted to a controller 60.

The controller 60 controls the operation of the above-described on-off valve V1 to adjust the methane number to meet the requirement of the second engine E2 based on the methane price measured by the measurement device 50.

For example, when it is determined that the methane number measured by the measurement device 50 is lower than the methane number required by the second engine E2 in the state where the on-off valve V1 is closed, the measurement device 50 transmits the methane number information to the controller 60.

Next, the controller 60 can meet the methane number condition required by the second engine E2 by a method of opening the on-off valve V1 and supplying the liquefied gas of the storage tank 10 to the gas-liquid separator 40 through the third supply line L3. The opening degree of the on-off valve V1 may vary according to a preset reference.

That is, when the on-off valve V1 is opened by the controller 60, the liquefied gas supplied from the storage tank 10 to the gas-liquid separator 40 through the third supply line L3 is mixed with the liquefied gas supplied to the gas-liquid separator 40 through the second supply line L2. At this time, by the liquefied gas supplied through the third supply line L3 branched from the first supply line L1 at the front end of the pressure pump 20, the components having high boiling points among components of the liquefied gas supplied through the second supply line L2 are liquefied and stored in the gas-liquid separator 40 as liquid components, and the components having relatively low boiling points are stored in the gas-liquid separator 40 as gas components. The components having low boiling points include methane component with a high methane number.

Next, the gas components having high methane numbers stored in the gas-liquid separator 40 are supplied to the second engine E2 as fuel gas through the fourth supply line L4, so that it is possible to effectively supply fuel gas in accordance with methane number condition required by the second engine E2.

Herein, a heater 70 is installed on the fourth supply line L4, so that it is possible to heat the fuel gas supplied to the second engine E2 in accordance with temperature condition required by the second engine E2.

Meanwhile, referring to FIG. 2, the injection device 80 may be provided at an outlet side end of the third supply line L3 extending to the inside of the gas-liquid separator 40 described above. The injection device 80 has a nozzle 81 to inject the liquefied gas supplied through the third supply line L3 into the gas-liquid separator 40. It is possible to easily mix the liquefied gases supplied through the second supply line L2 and the third supply line L3 by the injection nozzle 81, and effectively induce the increase of the methane number in the gas-liquid separator 40.

The foregoing has been shown and described with reference to specific embodiments. However, it will be understood by those skilled in the art that the present invention is not limited to the above-described embodiments, and may be variously modified and changed without departing from the technical idea of the present invention provided by the following claims.

## Claims

1. A fuel gas supply system (100) comprising:
a storage tank (10) to store liquefied gas and boil-off gas of the liquefied gas;
a pressure pump (20) to pressurize and discharge the liquefied gas supplied from the storage tank (10);
a vaporizer (30) to vaporize the liquefied gas that has passed through the pressure pump (20);
a pressure reducing valve (35) to receive and depressurize the vaporized gas;
a gas-liquid separator (40) to separate a mixture of the vaporized gas supplied through the pressure reducing valve (35) and the liquefied gas upstream of the pressure pump (20) supplied from the storage tank (10) into gas components and liquid components;
a first supply line (L1) to supply the liquefied gas supplied from the storage tank (10) to a first engine (E1) side through the pressure pump (20) and the vaporizer (30);
a second supply line (L2) branched from the first supply line (L1) downstream of the vaporizer (30) to supply the vaporized gas to the gas-liquid separator (40) side through the pressure reducing valve (35);
a third supply line (L3) branched from the first supply line upstream of the pressure pump (20) to supply the liquefied gas supplied from the storage tank (10) to the gas-liquid separator (40); and
a fourth supply line (L4) to supply the gas components separated by the gas-liquid separator (40) to a second engine (E2) having a lower operating pressure than the first engine (E1) as fuel gas.

2. The fuel gas supply system (100) according to claim 1, further comprising a heater (70) installed on the fourth supply line (L4) to heat the gas components supplied from the gas-liquid separator (40) in accordance with temperature condition required by the second engine.

3. The fuel gas supply system (100) according to claim 1, further comprising a measurement device (50) installed on the fourth supply line (L4) to measure a methane number of the fuel gas supplied to the second engine (E2).

4. The fuel gas supply system (100) according to claim 3, wherein the measurement device (50) may measure a methane number of the fuel gas with a method of sensing a temperature of the fuel gas.

5. The fuel gas supply system (100) according to claim 3, further comprising:
an on-off valve installed on the third supply line (L3); and
a controller (60) to compare a methane number measured by the measurement device (50) with a preset methane number and control the operation of the on-off valve in order to adjust a methane number in accordance with requirements by the second engine (E2).

6. The fuel gas supply system (100) according to claim 1, further comprising an injection device (80) installed at an outlet side end of the third supply line (L3) that extends to an inner side of the gas-liquid separator (40) to inject the liquefied gas supplied through the third supply line (L3) to the inner side of the gas-liquid separator (40).

7. The fuel gas supply system (100) according to claim 1, further comprising a delivery pump (15) installed inside the storage tank (10) to deliver the liquefied gas stored in the storage tank (10) through the first supply line (L1) according to a preset pressure.

## Patentansprüche

1. Brenngasversorgungssystem (100), umfassend:
einen Speichertank (10), um Flüssiggas und Boil-off-Gas des Flüssiggases zu speichern;
eine Druckpumpe (20), um das von dem Speichertank (10) gelieferte Flüssiggas mit Druck zu beaufschlagen und abzuleiten;
einen Verdampfer (30), um das Flüssiggas, das die Druckpumpe (20) durchlaufen hat, zu verdampfen;
ein Druckreduzierventil (35), um das verdampfte Gas aufzunehmen und seinen Druck zu reduzieren;
einen Gas-/Flüssigkeitsabscheider (40), um eine Mischung aus dem durch das Druckreduzierventil (35) gelieferten verdampfen Gas und dem von dem Speichertank (10) zugeführten Flüssiggas stromaufwärts der Druckpumpe (20) in Gaskomponenten und Flüssigkomponenten zu trennen;
eine erste Versorgungsleitung (L1), um das von dem Speichertank (10) gelieferte Flüssiggas durch die Druckpumpe (20) und den Verdampfer (30) der Seite eines ersten Motors (E1) zuzuführen;
eine zweite Versorgungsleitung (L2), die von der ersten Versorgungsleitung (L1) stromabwärts des Verdampfers (30) abzweigt, um das verdampfte Gas durch das Druckreduzierventil (35) der Seite des Gas-/Flüssigkeitsabscheiders (40) zuzuführen;
eine dritte Versorgungsleitung (L3), die von der ersten Versorgungsleitung stromaufwärts der Druckpumpe (20) abzweigt, um das von dem Speichertank (10) gelieferte Flüssiggas dem Gas-/Flüssigkeitsabscheider (40) zuzuführen; und
eine vierte Versorgungsleitung (L4), um die durch den Gas-/Flüssigkeitsabscheider (40) getrennten Gaskomponenten einem zweiten Motor (E2) mit einem niedrigeren Betriebsdruck als der erste Motor(E1) als Brenngas zuzuführen.

2. Brenngaszuführsystem (100) nach Anspruch 1, weiter umfassend eine an der vierten Versorgungsleitung (L4) installierte Heizvorrichtung (70), um die von dem Gas-/Flüssigkeitsabscheider (40) gelieferten Gaskomponenten gemäß der für den zweiten Motor erforderlichen Temperaturbedingung zu erwärmen.

3. Brenngaszuführsystem (100) nach Anspruch 1, weiter umfassend eine an der vierten Versorgungsleitung (L4) installierte Messvorrichtung (50), um eine Methanzahl des dem zweiten Motor (E2) zugeführten Brenngases zu messen.

4. Brenngaszuführsystem (100) nach Anspruch 3, wobei die Messvorrichtung (50) eine Methanzahl des Brenngases mit einem Verfahren zum Fühlen der Temperatur des Brenngases messen kann.

5. Brenngaszuführsystem (100) nach Anspruch 3, weiter umfassend:
ein an der dritten Versorgungsleitung (L3) installiertes An-Aus-Ventil; und
eine Steuerung (60), um eine von der Messvorrichtung (50) gemessene Methanzahl mit einer voreingestellten Methanzahl zu vergleichen und den Betrieb des An-Aus-Ventils zu steuern, um eine Methanzahl gemäß Anforderungen des zweiten Motors (E2) anzupassen.

6. Brenngaszuführsystem (100) nach Anspruch 1, weiter umfassend eine an einem Auslassseitenende der dritten Versorgungsleitung (L3) installierte Einspritzvorrichtung (80), die sich zu einer Innenseite des Gas-/Flüssigkeitsabscheiders (40) erstreckt, um das durch die dritte Versorgungsleitung (L3) der Innenseite des Gas-/Flüssigkeitsabscheiders (40) zugeführte Flüssiggas einzuspritzen.

7. Brenngaszuführsystem (100) nach Anspruch 1, weiter umfassend eine an dem Speichertank (10) installierte Förderpumpe (15), um das in dem Speichertank (10) gespeicherte Flüssiggas durch die erste Versorgungsleitung (L1) gemäß einem voreingestellten Druck zu fördern.

## Revendications

1. Système d'alimentation en gaz carburant (100) comprenant :
un réservoir de stockage (10) pour stocker du gaz liquéfié et du gaz évaporé du gaz liquéfié ;
une pompe de compression (20) pour comprimer et décharger le gaz liquéfié qui est alimenté depuis le réservoir de stockage (10) ;
un vaporisateur (30) pour vaporiser le gaz liquéfié qui est passé au travers de la pompe de compression (20) ;
une vanne de réduction de pression (35) pour recevoir et décomprimer le gaz vaporisé ;
un séparateur gaz - liquide (40) pour séparer un mélange du gaz vaporisé qui est alimenté et au travers de la vanne de réduction de pression (35) et du gaz liquéfié en amont de la pompe de compression (20) qui est alimenté depuis le réservoir de stockage (10) selon des composants gazeux et des composants liquides ;
une première ligne d'alimentation (L1) pour alimenter le gaz liquéfié qui est alimenté depuis le réservoir de stockage (10) sur un côté de premier moteur (E1) et au travers de la pompe de compression (20) et du vaporisateur (30) ;
une deuxième ligne d'alimentation (L2) qui est dérivée à partir de la première ligne d'alimentation (L1) en aval du vaporisateur (30) pour alimenter le gaz vaporisé sur le côté du séparateur gaz - liquide (40) et au travers de la vanne de réduction de pression (35) ;
une troisième ligne d'alimentation (L3) qui est dérivée à partir de la première ligne d'alimentation en amont de la pompe de compression (20) pour alimenter le gaz liquéfié qui est alimenté depuis le réservoir de stockage (10) sur le séparateur gaz - liquide (40) ; et
une quatrième ligne d'alimentation (L4) pour alimenter les composants gazeux qui sont séparés par le séparateur gaz - liquide (40) sur un second moteur (E2) qui présente une pression de fonctionnement qui est inférieure à celle du premier moteur (E1) en tant que gaz carburant.

2. Système d'alimentation en gaz carburant (100) selon la revendication 1, comprenant en outre un moyen de chauffage (70) qui est installé sur la quatrième ligne d'alimentation (L4) pour chauffer les composants gazeux qui sont alimentés depuis le séparateur gaz - liquide (40) conformément à une condition de température qui est requise par le second moteur.

3. Système d'alimentation en gaz carburant (100) selon la revendication 1, comprenant en outre un dispositif de mesure (50) qui est installé sur la quatrième ligne d'alimentation (L4) pour mesurer un indice de méthane du gaz carburant qui est alimenté sur le second moteur (E2).

4. Système d'alimentation en gaz carburant (100) selon la revendication 3, dans lequel le dispositif de mesure (50) peut mesurer un indice de méthane du gaz carburant au moyen d'un procédé de détection d'une température du gaz carburant.

5. Système d'alimentation en gaz carburant (100) selon la revendication 3, comprenant en outre :
une vanne marche - arrêt qui est installée sur la troisième ligne d'alimentation (L3) ; et
un contrôleur (60) pour comparer un indice de méthane qui est mesuré par le dispositif de mesure (50) avec un indice de méthane prédéfini et pour commander le fonctionnement de la vanne marche - arrêt afin de régler un indice de méthane conformément à des exigences du second moteur (E2).

6. Système d'alimentation en gaz carburant (100) selon la revendication 1, comprenant en outre un dispositif d'injection (80) qui est installé au niveau d'une extrémité de côté de sortie de la troisième ligne d'alimentation (L3) qui s'étend jusqu'à un côté interne du séparateur gaz - liquide (40) de manière à injecter le gaz liquéfié qui est alimenté par l'intermédiaire et au travers de la troisième ligne d'alimentation (L3) sur le côté interne du séparateur gaz - liquide (40).

7. Système d'alimentation en gaz carburant (100) selon la revendication 1, comprenant en outre une pompe de distribution (15) qui est installée à l'intérieur du réservoir de stockage (10) pour distribuer le gaz liquéfié qui est stocké dans le réservoir de stockage (10) par l'intermédiaire et au travers de la première ligne d'alimentation (L1) conformément à une pression prédéfinie.
